# DEMANDE DE BREVET EUROPEEN

(11) **EP 2 924 666 A1**
(43) Date de publication de la demande: **30.09.2015**
(21) Numéro de dépôt: 15160290.1
(22) Date de dépôt: 23.03.2015
(51) Int. Cl.: G07G 1/14, A47F 9/04, G06Q 20/20, G07F 5/18, G07F 11/00

(54) **Distributeur automatique**

(30) Priorité: 27.03.2014 FR 1452631
(71) Demandeur: DA24 Concept, 13013 Marseille (FR)
(72) Inventeur: Palumbo, Serge, 83400 Hyeres (FR); Dreyfus, Christian, 71530 Crissey (FR); Morelle, Pascal, 13600 La Ciotat (FR); Michel, Georges, 13009 Marseille (FR)
(74) Mandataire: Novagraaf Technologies

(57) **Abrégé**

La présente invention se rapporte à un dispositif de distribution automatique (1) de produits qui comprend un lieu de stockage de produits, un point de délivrance (31) des produits et une unité centrale reliée à un robot de déstockage, un système d'acheminement (6), une interface homme machine et une interface de paiement (8), il est caractérisé en ce qu'il comprend au moins un écran (72) déporté. Il est ainsi possible à partir d'un appareil placé dans un zone protégée de commander à l'extérieur de ladite zone, les produits sont ainsi hors de portée. Il est également possible d'avoir plusieurs écrans déportés, ce qui permet de servir plusieurs clients en même temps.

## Description

La présente invention se rapporte à un distributeur automatique. Ces machines permettent d'obtenir des biens, sans intervention humaine (en libre-service), grâce aux techniques d'automatique.

Les machines les plus courantes sont les distributeurs automatiques de boissons chaudes, notamment de café, mais on trouve aussi des distributeurs de boissons fraîches avec des ingrédients comme l'eau, les fruits ou le thé, ainsi que les distributeurs de snacks, l'offre alimentaire étant de plus en plus diversifiée vers les produits frais comme les sandwichs, les produits laitiers, les biscuits ou les fruits et légumes.

Mais depuis quelques années, les distributeurs offrent d'autres produits aux consommateurs. Les distributeurs d'articles pour nageurs et baigneurs implantées aux entrées des lieux comportant des piscines (piscines municipales ou privées, hôtels, camping...) sont un exemple. Ils distribuent des articles permettant de respecter les règlementations d'hygiène comme le maillot de bain ou le bonnets de bain, mais aussi des articles de confort comme les lunettes de bains, le gel douche ou le pince-nez.

On peut trouver également des distributeurs d'articles divers, dans des lieux ciblées. Ils peuvent distribuer des articles aussi divers et inattendus que des cadenas, des préservatifs, des pansements, des doses de lessives, des collants, des jeux de cartes, des parapluies etc.

Ces machines font appel à un grand nombre de techniques d'automatisation :
- Les monnayeurs, qui permettent la détection et l'identification des pièces de monnaie et/ou des billets de banques.
- Les lecteurs de carte, de clés sans monnaie, de puce sans contact (RFID) ou de porte-monnaie électronique. Des solutions de paiement comme les porte-monnaie électronique ou utilisant le téléphone portable commencent à apparaître.

Toutes ces machines se présentent en général, sous forme d'une seule armoire intégrant les fonctions de stockage, de payement et de mise à disposition du client des produits choisis.

Cependant, on constate de plus en plus de vandalisme sur ce type d'appareil, que ce soit pour voler les produits qui y sont stockés ou l'argent qui y reste. Il existe donc un besoin de sécuriser ces appareils.

D'autre part, chaque appareil ayant son propre stock, cela nécessite d'immobiliser un nombre plus important de produits et de recharger chaque appareil indépendamment.

Selon l'invention, le dispositif de distribution automatique de produits (ou distributeurs) comprend un lieu de stockage de produits, un point de délivrance des produits et une unité centrale reliée à un robot de déstockage, un système d'acheminement, une interface homme machine et une interface de paiement, il est caractérisé en ce qu'il comprend au moins un écran déporté. Il est ainsi possible à partir d'un appareil placé dans une zone protégée de commander à l'extérieur de ladite zone, les produits sont ainsi hors de portée. Il est également possible d'avoir plusieurs écrans déportés, ce qui permet de servir plusieurs clients en même temps.

Avantageusement, le point de délivrance des produits est sécurisé. Le point de délivrance est par exemple fermé par une porte qui ne s'ouvre que si on tape un code ou on fait lire une carte. L'utilisateur peut ainsi prendre les produits qu'il a commandés en toute sécurité.

Avantageusement, l'écran déporté est placé à l'extérieur d'un bâtiment. Il est ainsi possible de commander de l'extérieur d'un magasin quand celui-ci est fermé.

Selon une caractéristique particulière, le lieu de stockage des produits est déporté. Les produits sont par exemple stockés dans une armoire multi-étagères, chaque étagère comprenant plusieurs cases. Il sera ainsi possible d'avoir un espace de stockage de taille importante, sans commune mesure avec un distributeur classique et globalement d'optimiser la place disponible. Le même espace de stockage peut aussi servir à plusieurs distributeurs. Le stockage déporté permet de sécuriser les produits (par exemple : médicaments, bijoux...) dans un lieu sécurisé. Cela présente également l'avantage de pouvoir stocker des produits fragiles ou périssables dans des endroits protégés et/ou réfrigérés. La gestion du stock est également facilitée.

Selon une autre caractéristique, le système d'acheminement est à double sens. Ce qui permet au distributeur à la fois de distribuer des produits et reprendre ceux dont l'utilisateur n'a plus l'usage et/ou qui est périmé. Il peut également servir à acheminer l'argent dans un coffre afin qu'il soit stocké dans un lieu sécurisé.

Avantageusement l'unité centrale est reliée électriquement au robot de déstockage, au système d'acheminement, à l'interface homme machine, à l'interface de paiement et à l'écran déporté. La communication entre les différents éléments se fait électriquement, mais certains éléments pourrait également être commandés mécaniquement, hydrauliquement (comme par exemple: le robot et le point de délivrance,) ou par radio fréquence.

Selon une disposition particulière, il comprend un lecteur d'informations écrites numérisées. Le distributeur pourra ainsi lire des documents manuscrits tels que des ordonnances numérisées, une carte d'identité ou un passeport, ce qui permet de connaitre l'âge du client et respecter la législation en vigueur pour la distribution d'alcool par exemple.

Avantageusement, l'interface de paiement est apte à stocker des espèces et il comprend un module de récupération desdites espèces stockées. Les espèces peuvent ainsi être stockées dans un endroit sécurisé et disposé dans un autre lieu que l'interface de paiement, l'accès à ces espèces sera plus difficile pour un éventuel voleur.

Avantageusement, il comprend un lecteur de cartes apte à identifier et traiter des données personnelles. Ce lecteur de carte peut lire à la fois une carte à puce telle qu'une carte « vitale^{©} » par exemple ou une carte de mutuelle ou une carte de fidélité.

Selon une autre disposition, les données sont des données médicales et que les produits sont des médicaments. Le distributeur va alors pouvoir distribuer des médicaments à partir des données de la carte « vitale » et/ou de l'ordonnance. Le lecteur de carte sert à identifier le client et lire des données sécurisées sur la carte, par exemple le traitement médical suivi par le patient et les contre-indications des produits demandés, même au niveau des molécules en vente libre comme le « Paracétamol^{©}».

Avantageusement, l'unité centrale est reliée, par internet, à une base de données de médicaments et de leur utilisation. La base de données pourra par exemple être une base de données professionnelle intelligente actualisée régulièrement, telle que celle de type « Vidal^{©} » qui regroupe toutes les fiches des produits et toute la pharmacovigilance, qui permet d'informer le client. Il est alors possible de traiter les informations acquises et/ou demandées au client et les comparer aux bases de données et faire une analyse avec un algorithme dédié. Le distributeur peut ainsi « communiquer » avec l'utilisateur.

Avantageusement, l'unité centrale est apte à enregistrer et garder en mémoire les commandes et les informations échangées. L'unité centrale peut à la fois délivrer une information pertinente sur écran et garder en mémoire une copie de cette information. Une imprimante peut éventuellement délivrer au client un reçu détaillé avec toutes les informations acquises du client et garantir une traçabilité de la délivrance ou non des produits. Il est possible d'assurer un contrôle et une sécurité de délivrance en gardant en mémoire les numéros de lot, la quantité, la posologie et les contre-indications, la traçabilité des objets et des utilisateurs, des calculs statistiques et des transmissions des informations est possible.

L'invention concerne également un procédé de distribution automatique de produits caractérisé en ce qu'il comprend les étapes suivantes :
- Identification d'un utilisateur et de ses données propres,
- Enregistrement d'une commande d'un ou plusieurs produits,
- Vérification de la compatibilité de la commande avec les données de l'utilisateur,
- délivrance à l'utilisateur d'une notice résumant la compatibilité de la commande avec les données utilisateur,
- Paiement de la commande,
- Délivrance du ou des produits.

D'autres avantages pourront encore apparaître à l'homme du métier à la lecture des exemples ci-dessous, illustrés par les figures annexées, donnés à titre d'exemple :
- La figure 1 est un schéma du dispositif selon l'invention,
- La figure 2 est un exemple d'écran déporté.

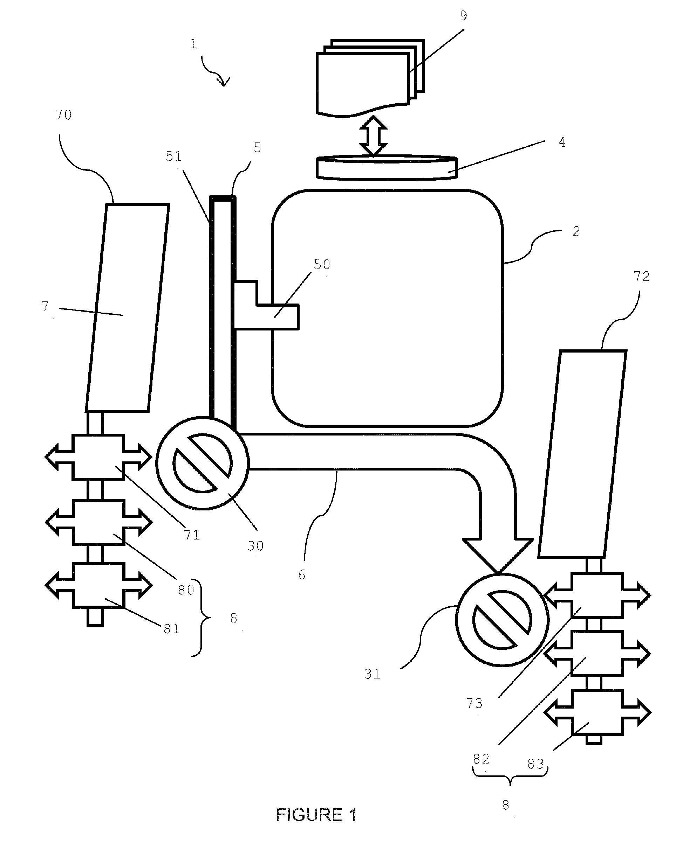

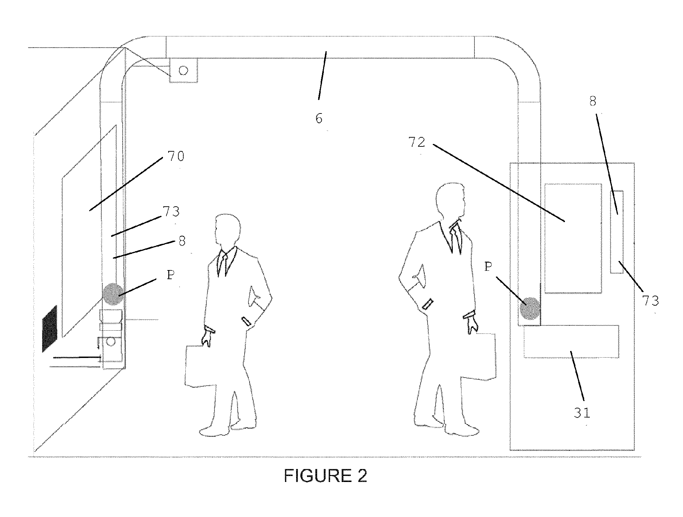

Le dispositif de distribution 1, illustré figures 1 et 2, comprend différents modules tels qu'un lieu de stockage de produits 2, un point de délivrance 3 des produits, une unité centrale 4 reliée à un robot de déstockage 5, un système d'acheminement 6, une interface homme machine 7 et une interface de paiement 8. L'interface homme machine 7 comprend un écran 70 tactile qui peut, éventuellement, être accompagné d'un clavier (non représenté). L'interface 7 comprend également un lecteur de carte à puce 71, type carte « vitale^{©} ». L'interface de paiement 8 est constitué d'un lecteur de carte bancaire 80 et un monnayeur 81. L'interface 7 a également un écran déporté 72 et un lecteur de carte à puce 73 déporté, avec une interface de paiement 8 déportée avec un lecteur de carte bancaire 82 et un monnayeur 83 tous les deux déportés. L'interface 7 peut être complétée par un lecteur d'informations écrites numérisées (non représenté) afin de pouvoir lire les ordonnances. On peut prévoir plusieurs interfaces déportées. Il est également possible de prévoir des modules supplémentaires tels qu'une imprimante (non représentée) afin d'imprimer des informations que l'on souhaite communiquer à l'utilisateur afin qu'il en garde une trace.

L'unité centrale 4 est reliée à l'ensemble des modules de façon à pouvoir les coordonner et prendre les commandes des utilisateurs. Ici, elle est également reliée à une base de données 9 professionnelle comme par exemple de type « Vidal » par une liaison internet.

Le lieu de stockage 2 des produits coopère avec le robot de déstockage 5. Ce robot 5 a un bras 50 pour le déchargement des produits qui coulisse verticalement sur un rail vertical 51, le rail 51 coulisse horizontalement grâce à un chariot (non représenté). Le robot 5 va chercher dans le lieu de stockage 2 le produit P commandé et le système d'acheminement 6 va le déposer au point de délivrance 3 qui pourra être le point de délivrance 30 ou le point de délivrance 31 déporté pour les commandes passées par l'intermédiaire de l'écran déporté 72. Le système d'acheminement 6 pourra par exemple être pneumatique ou par bande de roulement. Le système d'acheminement 6 est à double sens pour distribuer les produits P d'une part et pour récupérer des produits rapportés par un utilisateur et/ou de récupération des espèces fiduciaires pour les acheminer vers un coffre. Le dispositif 1 est également apte à gérer les stocks et les réapprovisionnements.

Nous allons maintenant décrire un exemple de fonctionnement du dispositif 1. Lorsqu'un utilisateur souhaite commander un ou plusieurs produit tel qu'un médicament, il va pouvoir se présenter soit devant un écran 70 placé à l'intérieur de la boutique ou de la pharmacie, soit devant un écran déporté 72 placé à l'extérieur si la boutique est fermée. Il va d'abord s'identifier en introduisant sa carte d'identité ou sa carte « vitale », et sa carte de mutuelle s'il en possède une, dans le lecteur de carte à puce 71 ou 73, il va passer son ordonnance dans le lecteur d'informations écrites numérisées, ses données propres et l'ordonnance vont être lues. Il va ensuite enregistrer une commande d'un ou plusieurs produits P sur l'écran 70 ou 72 s'il est tactile ou sur le clavier sinon. L'unité centrale 4 va alors vérifier la compatibilité de la commande, les informations du clients telles que les allergies, les antécédents et la posologie, avec les données saisie par l'utilisateur, grâce à la base de données professionnelle 9. L'unité centrale 4 peut éventuellement poser des questions si nécessaire. Si la commande est compatible, la commande sera validée. Il va ensuite délivrer à l'utilisateur un reçu détaillé avec toutes les informations acquises du client pour assurer une traçabilité de la délivrance ou non des produits, il résume la compatibilité de la commande avec les données utilisateur, il sera imprimé pour la délivrance au client. L'utilisateur n'a plus qu'à payer sa commande par carte ou en liquide pour recevoir le (ou les) produit (s) commandé(s). Le produit P va être pris dans le lieu de stockage 2 par le robot de déstockage 5, envoyé par le système d'acheminement 6 vers le point de délivrance 3 qui peut éventuellement être sécurisé. L'unité centrale 4 va garder en mémoire la commande, le résumé, l'identité du client et les numéros de lots afin d'assurer la traçabilité des produits et des utilisateurs et de faire des calculs statistiques. Grace à la liaison internet avec la base professionnelle actualisée régulièrement, le distributeur a la capacité de proposer des produits de substitution tels que des médicaments génériques. Il prend également en compte les contrainte réglementaires, la part à la charge du client, le tiers payant, la facturation, le paiement différé.

L'exemple illustré décrit un mode de réalisation complexe, mais bien entendu tous les modules utilisés pour une commande de médicaments n'est pas nécessaire pour d'autres types de produits. Le distributeur est modulaire, les différents modules sont indépendants ou non et reliés entre eux, mais il est possible d'ajouter de nouveaux modules et/ou de les déplacer, ou de les changer ce qui facilite la maintenance du dispositif. Ceci autorise la création de poste d'entrée ou de sortie supplémentaire, par exemple un module écran 7 est un poste d'entrée supplémentaire de dialogue avec l'unité centrale 4, permettant à deux client-opérateur de travailler en même temps. Autre exemple, plusieurs modules point de délivrance 3 autorisent des délivrances de produits à l'intérieur et à l'extérieur.

Pour la distribution de médicaments, le dispositif 1 intègre des fonctions opératives qui sont sous la responsabilité de professionnels (un pharmacien) soumis à une déontologie. Les capacités du dispositif à identifier, comparer, stocker, contrôler, décider et délivrer des récépissés, permettent de faire certifier les machines pour des distributions automatiques de produits normalement placés sous la responsabilité de ce type de professionnel. Pour exemple pour délivrer en toute sécurité et traçabilité totale des médicaments prescrits sur ordonnances. Les pharmacies ne pouvant assurer que partiellement, faute de plages d'ouverture étendues, le dispositif peut l'assurer 24h/24. Le pharmacien a aussi la possibilité de valider chaque délivrance depuis son ordinateur, qui constitue alors un module supplémentaire au dispositif.

## Revendications

1. Dispositif de distribution automatique (1) de produits comprenant un lieu de stockage (2) de produits, un point de délivrance (3, 30, 31) des produits et une unité centrale (4) reliée à un robot de déstockage (5), un système d'acheminement (6), une interface homme machine (7) et une interface de paiement (8) **caractérisé en ce qu'**il comprend au moins un écran (72) déporté et que le système d'acheminement (6) est à double sens.

2. Dispositif selon la revendication 1 **caractérisé en ce que** le point de délivrance (3, 30, 31) des produits est sécurisé.

3. Dispositif selon une des revendications précédentes **caractérisé en ce que** l'écran (72) déporté est placé à l'extérieur d'un bâtiment.

4. Dispositif selon une des revendications précédentes **caractérisé en ce que** le lieu de stockage (2) des produits est déporté.

5. Dispositif selon une des revendications précédentes **caractérisé en ce que** l'unité centrale (4) est reliée électriquement au robot de déstockage (5), au système d'acheminement (6), à l'interface homme machine (7), à l'interface de paiement (7) et à l'écran (72) déporté.

6. Dispositif de distribution automatique selon une des revendications précédentes qu'il comprend un lecteur d'informations écrites numérisées.

7. Dispositif de distribution automatique selon une des revendications précédentes que l'interface de paiement (8) est apte à stocker des espèces et qu'il comprend un module de récupération desdites espèces stockées.

8. Dispositif de distribution automatique selon une des revendications précédentes **caractérisé en ce qu'**il comprend un lecteur de cartes (71, 73) apte à identifier et traiter des données personnelles.

9. Dispositif de distribution automatique selon la revendication précédente **caractérisé en ce que** les données sont des données médicales et que les produits sont des médicaments.

10. Dispositif selon la revendication précédente, **caractérisé en ce que** l'unité centrale (4) est reliée, par internet, à une base de données (9) de médicaments et de leur utilisation.

11. Dispositif de distribution automatique selon une des revendications 9 ou 10 **caractérisé en ce que** l'unité centrale (4) est apte à enregistrer et garder en mémoire les commandes et les informations échangées.

12. Procédé de distribution automatique de produits **caractérisé en ce qu'**il comprend les étapes suivantes :
- Identification d'un utilisateur et de ses données propres,
- Enregistrement d'une commande d'un ou plusieurs produits,
- Vérification de la compatibilité de la commande avec les données de l'utilisateur,
- délivrance à l'utilisateur d'une notice résumant la compatibilité de la commande avec les données utilisateur,
- Paiement de la commande,
- Délivrance du ou des produits.
